# EUROPÄISCHE PATENTANMELDUNG

(11) **EP 1 036 499 A1**
(43) Veröffentlichungstag der Anmeldung: **20.09.2000**
(21) Anmeldenummer: 99104862.0
(22) Anmeldetag: 11.03.1999
(51) Int. Cl.: A01N 37/40

(54) **Verfahren zur Desinfektion, Reinigung und Stoffwechselaktivierung von Pflanzen gegen Pilze, Viren und Bakterien**

(71) Anmelder: Schwertner, Dr. Heiko, 20255 Hamburg (DE); Schwertner, Holger, 22607 Hamburg (DE)
(72) Erfinder: Schwertner, Dr. Heiko, 20255 Hamburg (DE); Schwertner, Holger, 22607 Hamburg (DE)

(57) **Zusammenfassung**

**2.1 Zielsetzung**
   Die Erfindung hat das Ziel Pflanzen, welche mit Keimen wie Pilze, Bakterien oder Viren kontaminiert sind, zu reinigen, zu desinfizieren und gegen Reinfektionen, durch Aktivierung von Stoffwechselreaktionen, zu stärken. Die dabei verwendeten Substanzen sollen biologisch abbaubar sein und möglichst in den Pflanzen, als Stoffwechselprodukt, ubiquitär verbreitet sein.
**2.2 Lösung des Problems**
   Die Aufgabe wird erfindungsgemäß, durch die Verwendung, einer Kombination von Salicylsäure mit mindestens einer oder mehreren organischen Säure und technischen Hilfsstoffen gelöst. Als Kombinationspartner werden Benzoesäure, Sorbinsäure, Milchsäure, Zitronensäure oder Oxalsäure eingesetzt. Weiterhin eignen sich die Gruppe der Fruchtsäuren oder der Huminsäuren. Die Zusammenstellung des Gemisches aus Salicylsäure und einer bzw. mehreren weiteren Säuren und deren Mischungsverhältnis, sind abhängig von der Art der Verwendung und des Einsatzgebietes der Formulierung.
**2.3 Anwendungsgebiete**
   Die erfindungsgemäße Anwendung der Kombination von Salicylsäure mit mindestens einer oder mehreren Säuren, eignet zur Behandlung von Nutz-, Nahrungs- und Gebrauchspflanzen gegen Pilze, Viren und Bakterien. Dabei werden sowohl pflanzen-, als auch human- oder veterinär pathogene Keime desaktiviert oder abgetötet.

## Beschreibung

### Überschrift

Verfahren zur Desinfektion, Reinigung und Stoffwechselaktivierung von Pflanzen gegen Pilze, Viren und Bakterien.

### Einleitung

Die Erfindung hat das Ziel Pflanzen, deren Bestandteile und Fruchtkörpern von pflanzen und human pathogenen Keimen wie Pilze, Viren und Bakterien durch Desinfektion der Pflanzenoberfläche zu befreien. Aufgabe war es ein Substanzgemisch zu finden, daß für Pflanzen, Umwelt und Mensch verträgliche aktive Substanzen enthält und gleichzeitig eine umfassende Wirkung gegen die oben genannten Keime besitzt. Weiteres Ziel war es die Pflanzen langfristig, durch Aktivierung der Pflanzen eigenen Abwehrmechanismen zu schützen und eine möglichst breite Anwendung sowohl auf Nutz-, Nahrungs-, als auch auf Wildpflanzen zu ermöglichen. Ferner ist es das Ziel der Erfindung , das die Desinfektions- und Reinigungseigenschaft auch auf Gegenstände(z.B. im Arbeits-, Haushalts- oder technischen Bereich), Oberflächen wie Behälter, Wände, Tische, Glasflächen, Böden etc. und auch zur Trinkwasserdesinfektion angewandt werden kann.

Die Verwendung der Formulierung, im folgenden Desinfektionsmittel genannt, trifft auf einen breiten Anwendungsbereich. Die Bereiche Pflanzenproduktion und Lebensmittelhygiene sind hier herauszustellen. In der Pflanzenproduktion, sowohl für die Nahrungspflanzen- und Zier- bzw. Gebrauchspflanzen Herstellung, verursachen pflanzenpathogene Keime Schäden in Milliardenhöhe, z.B. durch Wachstumshemmung, Fäulnis etc.. Im Bereich der Lebensmittelhygiene kommt es immer wieder zur Kontamination von Gemüsen oder Früchten mit human pathogenen Keimen, wie z.B. Eschericha coli oder Salmonellen spec.. Eine derartige Verschmutzung kann gravierende negative gesundheitliche Folgen haben, wie dies dramatische Ereignisse aus den USA und anderen Ländern belegen.

### Stand der Technik

Nach dem heutigen Stand der Technik wird in der Pflanzenproduktion eine Vielzahl von Desinfektionsmitteln eingesetzt. Viele von diesen Produkten können nur sehr eingeschränkt eingesetzt werden, da ihre aktiven Substanzen eine Vielzahl von nicht tolerierbaren Nebenwirkungen besitzen und sie meist nur gegen eine Keimart gerichtet ist. Unter anderen wird Benzoesäure, Benzalkoniumchlorid, quaternäre Ammoniumverbindungen, Kupferverbindungen oder Peroxide oder eine Kombination aus diesen bei Desinfektionsmitteln eingesetzt. Diese Substanzen können aufgrund ihrer Nebenwirkungen nicht auf Pflanzen angewandt werden, sie sind nur als Desinfektionsmittel für Oberflächen zugelassen. Nur wenige habe eine Zulassung für den Zier- und Gebrauchspflanzenbereich, da sie sowohl die Pflanzen schädigen, wie Peroxide, als auch human toxische Wirkungen haben. Ferner sind die heute verwendeten Substanzen nicht in der Lage zur gleichen Zeit Pilze, Viren und Bakterien zu bekämpfen. Zwar werden Kombination aus diesen Substanzen verwendet, was jedoch die potentiellen Schäden vervielfacht.

Eine Aktivierung von Pflanzenstoffwechselvorgängen während der Anwendung als Desinfektionsmittel nicht beschreiben worden. Keine dieser Verbindungen bewirkt eine nachgewiesene Steigerung der Abwehr gegenüber pathogenen Keimen, über die Aktivierung von Stoffwechselvorgängen, in der Pflanze.

Selbst bei sachgerechter Durchführung der verschiedenen Formulierungen treten Nebenwirkungen auf. Als gravierende Nebenwirkungen dieser Mittel sind z.B. Anreicherungen in der Umwelt oder im Mensch nachgewiesen, wie bei den schwermetallhaltigen Mitteln. Quaternäre Ammoniumverbindungen oder Peroxide besitzen negative Eigenschaften auf die Zelle, wie Stoffwechselstörungen etc. und stehen in dem Verdacht mutagene Wirkungen zu besitzen. Neben den toxischen Wirkungen auf Tierwelt sind auch negative auf die Pflanzen beschrieben worden. Diese Eigenschaften sind es die eine Anwendung auf Nahrungspflanzen oder Produkte aus diesen verbieten. Die viele der Nebenwirkungen dieser Substanzen haben schon Eingang in die allgemeine Literatur gefunden (Beispiel Monographie: Allgemeine und spezielle Pharmakologie und Toxikologie, Herausgeber W. Forth, D. Henschler, W. Rummel erschienen im B.I.-Verlag Mannheim, diverse Auflagen sind erschienen. ).

Die erfindungsgemäße Formulierung eines Desinfektions- und Reinigungsmittels welche sowohl eine umfassende desinfizierende, als auch eine den Pflanzenstoffwechsel aktivierende, Eigenschaft entfaltet, ist noch nicht beschrieben worden. Ebenfalls ist in diesem Zusammenhang noch nicht die generelle Möglichkeit beschrieben worden, das Pflanzen, deren Bestandteile und Fruchtkörpern von pflanzen und human gegen pathogenen Keimen wie Pilze, Viren und Bakterien durch Desinfektion der Pflanzenoberfläche geschützt werden können. Ein Substanzgemisch, daß für Pflanzen, Umwelt und Mensch verträgliche aktive Substanzen enthält und gleichzeitig eine umfassende Wirkung gegen die oben genannten Keime besitzt und eine möglichst breite Anwendung sowohl auf Nutz-, Nahrungs-, als auch auf Wildpflanzen ermöglicht und sogar auch auf Gegenstände (z.B. im Arbeits-, Haushalts- oder technischen Bereich), Oberflächen wie Behälter, Wände , Tische, Glasflächen, Böden etc. und auch zur Trinkwasserdesinfektion angewandt werden kann, ist noch nicht beschrieben worden.

### Vorteile der Erfindung

Der erfindungsgemäße Einsatz des Desinfektionsmittels eröffnet neue Anwendungsbereiche in der Dekontamination von Pflanzen, deren Bestandteile und Fruchtkörper bei Nahrungspflanzen- und Zier- bzw. Gebrauchspflanzen.

Das Desinfektionsmittel hat eine primäre und eine sekundäre Wirkung auf die behandelten Pflanzen. Die primäre Wirkung, auch Sofortwirkung genannt, der Formulierung besteht in der Abtötung bzw. Deaktivierung von Keimen. Dabei werden alle Keime sowohl pflanzen-, als auch human pathogene Pilze, Viren oder Bakterien geschädigt und damit unwirksam gemacht. Es besteht auch eine Wirkung gegen Algen. Der primäre Effekt ist zwar nur von relativ kurzer Wirkung, wenn das Mittel im Freiland angewandt wird und sorgt generell für eine Minderung des Keimdruckes. Werden Pflanzenbestandteile wie zum Beispiel Gemüse oder Obst keimfrei verpackt, so ist die Wirkung wesentlich länger anhaltend. Auf diesem Wege kann das Risiko einer Infektion mit human pathogenen Keimen stark vermindert werden.

Der erfindungsgemäße Einsatz des Desinfektionsmittels hat eine Aktivierung der Abwehrreaktion zur Folge. Diese Abwehrreaktion ist die folge der sekundären Stoffwechselaktivierung und führt dazu, daß die Pflanze einen lang anhaltenden Schutz insbesondere vor pflanzenpathogenen Keimen entwickelt.

Während der primären Desinfektion werden, wie zur beschrieben sowohl pflanzen-, als auch human pathogene Pilze, Viren oder Bakterien abgetötet. Die sekundäre Wirkung ist fast ausschließlich gegen pflanzen pathogene Keime gerichtet.

Bei der Anwendung des Mittels tritt unter anderem eine Stärkung der Pflanze ein. Diese wird durch die Minderung der Keime auf der Oberfläche und die Reinigung der Blattoberfläche erzielt. Diese Stärkung führt zu einem besseren Wuchs und einer besseren Ausnutzung der angebotenen Nahrungsquellen.

Diese kombinatorischen Eigenschaften des Desinfektionsmittels werden durch aktive Substanzen erzielt die im Pflanzenreich auftreten, bzw. ubiqitär vorkommen. So ist eine gute bis vollständige biologische Abbaubarkeit und eine gute Umweltverträglichkeit erzielbar.

Ein wesentlicher Vorteil der Erfindung ist die Bereite der Anwendungsmöglichkeiten bei sehr geringen Nebenwirkungen. So kann die Formulierung auf Pflanzen, deren Bestandteile und Fruchtkörpern von pflanzen und human pathogenen Keimen wie Pilze, Viren und Bakterien durch Desinfektion der Pflanzenoberfläche Anwendung finden. Die behandelten Pflanzen lassen sich langfristig, durch Aktivierung der Pflanzen eigenen Abwehrmechanismen zu schützen, so daß eine breite Anwendung auf Nutz-, Nahrungs-, als auch auf Wildpflanzen ermöglichen wird. Ferner können die Eigenschaften der Erfindung, auch auf Gegenstände(z.B. im Arbeits-, Haushalts- oder technischen Bereich), Oberflächen wie Behälter, Wände , Tische, Glasflächen, Böden etc. und auch zur Trinkwasserdesinfektion angewandt werden.

Die möglichen Anwendungsbereich liegen unter anderem in der Pflanzenproduktion und Lebensmittelhygiene.
Ein weiterer Bereich der Anwendung ist die Lebensmittelhygiene, wo es immer wieder zur Kontamination von Gemüsen oder Früchten mit human pathogenen Keimen, wie z.B. Echericha coli oder Salmonellen. Eine derartige Verschmutzung kann gravierende negative gesundheitliche Folgen haben, wie dies dramatische Ereignisse aus den USA und anderen Ländern belegen.

### Aufgabe der Erfindung

Die der Erfindung zugrunde liegende Aufgabe besteht darin, Pflanzen, welche mit Keimen kontaminiert sind, zu desinfizieren und gegen Reinfektionen zu stärken. Die dabei verwendeten Substanzen sollen biologisch abbaubar sein und möglichst in den Pflanzen, als Stoffwechselprodukt, ubiquitär verbreitet sein. Dies sollte mit einer guten Reinigungswirkung verbunden sein.

Eine zweite, der Erfindung zugrunde liegende, Aufgabe besteht darin, vorhandene Abwehrmechanismen gegen pflanzenpathogene Keime der Pflanzen zu aktivieren.

Eine dritte, der Erfindung zugrunde liegende, Aufgabe besteht darin, das nachteilige Wirkungen der verwendeten Substanzen in der Formulierung, auf die Umwelt oder den Menschen weitgehend ausgeschlossen werden können.

### Ausführung der Erfindung

Die Aufgabe wird erfindungsgemäß durch eine Kombination von Salicylsäure mit mindestens einer oder mehreren organischen Säure gelöst. Als Kombinationspartner der Salicylsäure werden Benzoesäure, Sorbinsäure, Milchsäure, Zitronensäure oder Oxalsäure eingesetzt. Weiterhin eignen sich die Gruppe der Fruchtsäuren oder die der Huminsäuren. Die Zusammenstellung des Gemisches aus Salicylsäure und einer bzw. mehreren weiteren Säuren und deren Mischungsverhältnis sind abhängig von der Art der Verwendung und des Einsatzgebietes der Formulierung.

Alle aktiven Substanzen sind Stoffwechselprodukte die zum Teil ubiquitär in der Pflanzenwelt wie Salicylsäure auftreten. Neben der Salicylsäure haben einige der zuvor beschriebenen Säuren nachgewiesene Steigerungen der Stoffwechselaktivitäten zur Abwehr von pathogenen Keimen. Allerdings hat nur die Salicylsäure einen umfassenden Einfluß auf die Stoffwechselaktivitäten der Pflanze. Eine Kombination der Salicylsäure mit Benzoesäure, Sorbinsäure, Milchsäure, Zitronensäure, Oxalsäure, Fruchtsäuren oder der Huminsäuren, hat jedoch eine starke positiv synergistische Wirkung auf die Stoffwechselaktivitäten der Pflanze. Diese Eigenschaft wird als sekundärer Effekt der Formulierung bezeichnet. Eine solche positiv synergistische Wirkung von anderen Substanzen mit anderen Zielrichtung ist schon in der allgemeinen Literatur beschrieben worden. (Beispiel Monographie: Allgemeine und spezielle Pharmakologie und Toxikologie, Herausgeber W. Forth, D. Henschler, W. Rummel erschienen im B.I.-Verlag Mannheim, diverse Auflagen sind erschienen. ).

Eine Kombination dieser Säuren hat jedoch nicht nur eine positiv synergistische Wirkung auf die Stoffwechselaktivitäten der Pflanze, sondern auch auf die primäre desinfizierende Wirkung. Aus diesem Grund werden nicht nur pflanzen-, sondern auch andere pathogene Pilze, Viren und Bakterien aus humanen und veterinär Bereich abgetötet oder deaktiviert.

Zur praktischen Anwendung können der Formulierung einige technische Hilfsstoffe beigegeben werden. Insbesondere sind hier Tenside zu erwähnen. Diese verringern die Oberflächenspannung, was eine vollständige Benetzung der behandelten Oberfläche ermöglicht. Diese Eigenschaft ist besonders während der primären Desinfektion gewünscht. Andere technische Hilfsstoffe können z.B. die Reinigungskraft heraufsetzen, die Viskosität erhöhen oder den Gefrierpunkt herabsetzen.

Die Zusammenstellung des Gemisches aus Salicylsäure und einer bzw. mehreren weiteren Säuren und eventuellen weiteren technischen Hilfsmitteln ist abhängig von der Art der gewünschten Verwendung und des Einsatzgebietes der Formulierung.

## Patentansprüche

1. Die Erfindung ist dadurch gekennzeichnet, daß eine Kombination von Salicylsäure oder deren Salze mit einer oder mehreren der Säuren Benzoesäure, Sorbinsäure, Milchsäure, Zitronensäure, Oxalsäure, Fruchtsäuren oder der Huminsäuren, bzw. deren Salze, zur Desinfektion und Reinigung von Pflanzen, deren Teile und Fruchtkörpern von pflanzen - und human pathogenen Keimen wie Pilze, Viren und Bakterien eingesetzt wird.

2. Das Desinfektions- und Reinigungsmittel nach Anspruch 1 und 2, ist dadurch gekennzeichnet, daß die Kombination von Salicylsäure deren Salze mit einer oder mehreren der Säuren Benzoesäure, Sorbinsäure, Milchsäure, Zitronensäure, Oxalsäure, Fruchtsäuren oder der Huminsäuren, bzw. deren Salze, durch technische Hilfsstoffe wie Tenside, pH-Wert-Stabilisatoren, Stoffe zur Viskositätsänderung, Gefrierpunktsänderung, etc. ergänzt werden kann.

3. Das Desinfektions- und Reinigungsmittel nach Anspruch 1, ist dadurch gekennzeichnet, daß das Desinfektions- und Reinigungsmittel als Granulat oder als Flüssigkeit ausgeführt werden kann.

4. Das Desinfektions- und Reinigungsmittel nach Anspruch 1 und 2, ist dadurch gekennzeichnet, daß die Formulierung als Konzentrat oder als Verdünnung ausgeführt werden kann.

5. Das Desinfektions- und Reinigungsmittel nach Anspruch 1 bis 3, ist dadurch gekennzeichnet, daß die Formulierung auf vollständige oder abgetrennte Pflanzenteile, einschließlich Saaten, angewendet werden kann.

6. Das Desinfektions- und Reinigungsmittel nach Anspruch 1 bis 3, ist dadurch gekennzeichnet, daß die Formulierung auf Lebensmitteln aller Art, sofern diese Säure verträglich, sind angewendet werden kann.

7. Das Desinfektions- und Reinigungsmittel nach Anspruch 1 bis 3, ist dadurch gekennzeichnet, daß die Formulierung auf Gegenstände (z.B. im Arbeits-, Haushalts- oder technischen Bereich), Oberflächen wie Behälter, Wände , Tische, Glasflächen, Böden etc. und zur Trinkwasserdesinfektion angewandt werden kann.
